# EUROPÄISCHE PATENTSCHRIFT

(11) **EP 3 865 281 B1**
(45) Veröffentlichungstag und Bekanntmachung des Hinweises auf die Patenterteilung: **18.01.2023**
(21) Anmeldenummer: 20157407.6
(22) Anmeldetag: 14.02.2020
(51) Int. Cl.: B29C 64/124, B29C 64/232, B29C 64/236, B33Y 10/00, B33Y 30/00, B29C 64/255, B33Y 40/00, B33Y 50/02

(54) **STEREOLITHOGRAPHIE-VORRICHTUNG**
STEREOLITHOGRAPHY DEVICE
DISPOSITIF DE STÉRÉOLITOGRAPHIE

(43) Veröffentlichungstag der Anmeldung: 18.08.2021
(73) Patentinhaber: Ivoclar Vivadent AG, 9494 Schaan (LI)
(72) Erfinder: Bonderer, Lorenz Josef, 7320 Sargans (CH); Ebert, Jörg, 9470 Buchs (CH); Senti, Theresa Sujata Maria, 9486 Schaanwald (LI); Jussel, Rudolf, 6805 Feldkirch-Gisingen (AT)
(74) Vertreter: Baronetzky, Klaus

(56) Entgegenhaltungen:
- WO-A1-2019/130734
- CA-A1- 3 062 721
- CN-A- 105 946 237
- US-A1- 2017 297 264

## Beschreibung

Die Erfindung betrifft eine Stereolithographie-Vorrichtung, gemäß dem Oberbegriff von Anspruch 1, sowie ein Verfahren zum Betrieb einer Stereolithographie-Vorrichtung, gemäß dem Oberbegriff von Anspruch 12. Derartige Stereolithographie-Vorrichtungen sind seit längerem bekannt. Ein Beispiel hierfür ist die aus der DE 41 25 534 A1 bekannte Lösung. In an sich bekannter Weise wird die zu erzeugende Struktur schichtweise mit Druckmaterial aufgebaut und durch Bestrahlung durch eine Glasplatte gehärtet. Wenn die Durchhärtung der Schicht erfolgt ist, muss der Abstand zwischen Glasplatte und Bauplattform vergrößert werden, um eine dazwischen befindliche Folie von der befestigten Struktur abzulösen.

Bei der genannten Stereolithographie-Vorrichtung gemäß der DE 41 25 534 A1 ist die Bauplattform in einer Wanne mit Druckmaterial angeordnet und wird abgesenkt, um ein Lösen von der Folie zu bewirken.

Um das Lösen zu erleichtern, soll eine zusätzliche Scherwirkung erzeugt werden, also eine seitliche Bewegung der Bauplattform, zusätzlich zu der Absenkbewegung.

Diese soll durch eine Rotationsvorrichtung erzeugt werden, die die gesamte Bauplattform um eine vertikale Achse dreht.

Diese Lösung hat sich nicht durchgesetzt, da sich bei der praktischen Realisierung zeigte, dass die dortige Folie zu großen Spannungen ausgesetzt war und dementsprechend gerissen ist.

Dieses Konzept wurde daher lange Zeit nicht weiterverfolgt.

US 2017/297264 A1 offenbart eine Stereolithographie-Vorrichtung und ein Verfahren zum Betrieb einer Stereolithographie-Vorrichtung gemäß dem Oberbegriff der unabhängigen Ansprüche 1 und 12.

Auch in der Folge wurden Stereolithographie-Vorrichtungen verwendet, bei denen die Bauplattform sich beim Ablösen sich nach unten bewegt und dann insofern in der mit Druckmaterial gefüllten Wanne angeordnet ist. Beispielsweise wurde gemäß der DE 199 29 199 A1 eine transparente Platte verwendet, an der eine Schicht aufgebracht ist, an der das Druckmaterial auch in verfestigter Form nicht anhaften sollte.

Ablöseprobleme bestanden und bestehen jedoch nach wie vor.

Um solchen zu begegnen, ist sogar eine komplizierte Trennkraftsteuerung vorgeschlagen worden, bei welcher die Spannung in der Folie aufwändig gemessen werden soll, um ein Reißen der Folie zu vermeiden.

Diese bekannten Lösungen hatten jedoch den Nachteil, dass sie entweder ein ausgesprochen langsames Ablösen erforderten oder punktuell zu Überlastungen der Folie führen, die zumindest deren Lebensdauer beeinträchtigten.

Selbst wenn die Ablösezeit pro Schicht nur 10 sek. beträgt, ist die erforderliche Prozesszeit im Hinblick auf die beispielsweise 1000 Schichten, aus denen eine Struktur beispielsweise erzeugt werden kann, beträchtlich.

Trotz der Verwendung von besonders reißfesten Folien kam es bei schnelleren Ablöseprozessen immer wieder zum Reißen.

Der Festigkeit der Folie sind andererseits Grenzen gesetzt, da sie zum einen transparent sein muss, um die Belichtung der zu belichtenden Stellen der Struktur zu ermöglichen und andererseits nicht zu dick sein sollte, da eine präzise und flache Anlage an der Glasplatte für die Genauigkeit der Bereitstellung der Details der Struktur unabdingbar ist. Zudem sollen Transmissionsverluste durch zu dicke Folien möglichst vermieden werden.

Daher liegt der Erfindung die Aufgabe zugrunde, eine Stereolithographie-Vorrichtung gemäß dem Oberbegriff von Anspruch 1 und ein Verfahren zum Betrieb einer Stereolithographie-Vorrichtung gemäß dem Oberbegriff von Anspruch 12 zu schaffen, das einen vergleichsweise raschen Betrieb der Stereolithographie-Vorrichtung ermöglicht, ohne dass die Haltbarkeit und damit die Lebensdauer beeinträchtigt wäre.

Diese Aufgabe wird erfindungsgemäß durch Anspruch 1 bzw. 12 gelöst. Vorteilhafte Weiterbildungen ergeben sich aus den Unteransprüchen. Erfindungsgemäß ist es vorgesehen, dass die Stereolithographie-Vorrichtung eine Wanne mit einer lichtdurchlässigen Folie aufweist.

Die elastische Folie ist mit der Wanne randseitig verbunden und ist dort eingespannt gehalten. In entspanntem Zustand liegt sie auf dem Boden der Wanne auf. Dieser ist durch eine Glasplatte gebildet.

Bei dieser Lösung kann die Bauplattform von oben in die Wanne eingeführt werden. Die Wanne ist mit Druckmaterial gefüllt, und die Bauplattform taucht in das Druckmaterial ein.

Erfindungsgemäß ist eine Steuervorrichtung vorgesehen, die die Bewegungen der Bauplattform steuert. Zum einen wird eine im wesentlichen vertikale Bewegung gesteuert, die eine Zustellbewegung umfasst, also eine Bewegung von oben nach unten, und eine Lösebewegung, also eine Bewegung von unten nach oben, für das Lösen einer erzeugten Struktur von einer Folie, die unten in der Wanne gehalten ist. Zum anderen eine Querbewegung, die als Bewegung der Wanne ausgebildet ist, welche wechselnde Bewegungsrichtungen hat, wobei die Querbewegung in einem Winkel zwischen 60 Grad und 120 Grad relativ zur Lösebewegung verläuft, wobei der Winkel zwischen der Quer- und der Lösebewegung von 90 Grad abweicht.

An die Lösebewegung schließt sich eine Hebebewegung an, in welcher die Bauplattform und die dort teilweise schon erstellte Struktur frei von Kontakt mit der Folie ist und in welcher die Bauplattform weiter nach oben bewegt wird.

Hier wird von einer vertikalen Lösebewegung und auch einer im Übrigen vertikalen Bewegung gesprochen. Diese Bewegungen können gegebenenfalls auch leicht schräg in einem Winkel von bis zu +/- 20° zur vertikalen Achse erfolgen.

Die genannten Bewegungen sind als Relativbewegungen zu verstehen. Die Querbewegung verläuft also quer relativ zur Zustell- und zur Lösebewegung.

Die Bauplattform wird im wesentlichen vertikal bewegt, und die Wanne in einem Winkel zwischen 60 Grad und 120 Grad relativ zu dieser, wobei der Winkel zwischen der Quer- und der Lösebewegung von 90 Grad abweicht. Eine kinematische Umkehr welche nicht unter die beanspruchte Erfindung fällt ist aber grundsätzlich auch möglich.

Die Wanne ist mit fließfähigem Druckmaterial befüllt, und in an sich bekannter Weise wird das Druckmaterial von unten durch eine Glasplatte im Bodenbereich der Wanne und durch die transparente Folie hindurch an den Stellen belichtet, an denen die Struktur gebildet werden soll.

Die Struktur wird schichtweise gebildet, in sogenannten Slices. Jede Sicht kann beispielsweise 0,02 bis 0,15 mm dick sein, oder beispielsweise 0,08 mm. Jede Schicht wird erzeugt, indem durch die Belichtung durch eine starke Lichtquelle an den entsprechenden Stellen, die belichtet werden sollen, eine Lichthärtung des Druckmaterials vorgenommen wird. Die Belichtung verfestigt das Druckmaterial an der gewünschten Stelle, während das Druckmaterial mit der Folie und der vorhergehenden Schicht - oder gegebenenfalls der Bauplattform - Kontakt hat.

Für die Bereitstellung der nächsten Schicht muss die Bauplattform mit der bereits fertiggestellten Struktur angehoben werden, damit weiteres fließfähiges Druckmaterial auf die Folie gelangen kann und damit die nächste Schicht durch Lichthärtung erzeugt werden kann.

Die Folie ist elastisch, damit sie auftretenden Spannungen Rechnung tragen kann. Aufgrund von Oberflächeneffekten haftet sie an der gerade gehärteten Schicht. Die Lösebewegung hat daher eine Höhe, die die Schichtdicke erheblich übersteigt. Beispielsweise kann die Bauplattform um mindestens 5 mm angehoben werden, um sicherzustellen, dass neues Druckmaterial auf die Folie auffließt.

Erfindungsgemäß ist die im wesentlichen vertikale Lösebewegung der Bauplattform mit einer Querbewegung in einem Winkel zwischen 60 Grad und 120 Grad relativ zur Lösebewegung, wobei der Winkel zwischen der Quer- und der Lösebewegung von 90 Grad abweicht. überlagert und kombiniert. Die Querbewegung ist erfindungsgemäß mit wechselnden Bewegungsrichtungen ausgebildet, die besonders bevorzugt hin- und hergehen und insbesondere periodisch sind.

Überraschend ergibt sich durch die hin- und hergehende Bewegung eine deutlich verbesserte Ablösewirkung und damit eine geringere Belastung der Folie. Diese kann daher entweder dünner sein, was präzisere Strukturen ermöglicht, oder die Haltbarkeit der Folie ist deutlich verbessert.

Zudem ermöglicht eine geringere Belastung der Folie die Verwendung einer dünneren Folie. Diese bietet erhebliche Vorteile:
Die Transmissionseigenschaften sind besser, was zu einer kürzeren Belichtungszeit und damit zu einem schnelleren Prozess führt.
Die Streuung ist geringe, so dass die Genauigkeit der Ortsauflösung verbessert wird.
Die Strahlungsintensität kann vermindert werden, was zu einer höheren Lebensdauer der verwendeten Lichtquellen führen kann.

Versuche haben ergeben, dass die Ablöseneigung durch die Hin- und Rückquerbewegung nahezu verdoppelt wird, dass also das Ablösen schon bei der Hälfte der vertikalen Lösebewegung im Vergleich mit einer vertikalen Lösebewegung ohne doppelseitige Querbewegung erfolgt.

Dies stellt einen erheblichen Fortschritt dar, da dann auch die Absenkbewegung lediglich die halbe Höhe erfordert und damit insgesamt die Arbeitsleistung der Stereolithographie-Vorrichtung zwischen den Belichtungsfenstern nahezu verdoppelt werden kann. Unter Absenkbewegung ist hier die Bewegung der Bauplattform beim Absenken zu verstehen, während unter Zustellbewegung die Bewegung dieser bis zu einer Zielposition zu verstehen ist. In dieser Zielposition beträgt der Abstand der Struktur von der Oberseite der Folie 1 Schichtstärke, also z.B. 0,08 mm, so dass die Belichtung der nächsten Schicht erfolgen kann.

Besonders günstig ist eine Art Schaukelbewegung als Querbewegung. Diese ermöglicht es - insofern über eine rein translatorische Bewegung hinausgehend - die Seitwärtsbewegung mit einer Aufwärtsbewegung bzw. Abwärtsbewegung zu kombinieren.

Die Folie ist in an sich bekannter Weise aus einem hochelastischen Material. Bei Entspannung federt sie zurück und lässt sich im hohen Maße dehnen, ohne zu reißen.

Die erfindungsgemäße Lehre ermöglicht nun Querbewegungen der Folie in zwei Richtungen, die das Ablösen offenbar stark unterstützen.

Hierbei ist zu berücksichtigen, dass die Haftung zwischen der Struktur und der Folie lediglich im Grenzbereich zwischen diesen beiden Materialien besteht.

Über die Dicke der Folie verformt sich diese mit zunehmendem Abstand von der Struktur stärker. Bei Entlastung zieht die Folie sich wieder zusammen.

Im Mittenbereich der Folie entstehen durch die Hin- und Herbewegung mikroskopisch betrachtet Scherbewegungen relativ zu der Struktur, insofern also unter anderem auch eine Scherbewegung bei der Entspannung der Folie. Auch diese unterstützt offenbar das Ablösen.

Gegenüber einem einseitigen Ziehen ist durch die zweiseitige Bewegung in Querrichtung der Querbewegungsanteil verdoppelt.

Erfindungsgemäß wichtig ist es, dass zu einer die Scherspannung gehörenden Querbewegung auch eine die Scherspannung reduzierende oder aufhebende Bewegung gehört.

Dies kommt bei den in vorteilhafter Weiterbildung vorgesehenen Hin- und Rück-Querbewegungen zur Anwendung.

Betrachtet man die Querauslenkung, so entsteht bei der Hin-Querbewegung eine Scherspannungszunahme und bei der Rück-Querbewegung bis zum Bewegungsmittelpunkt eine Scherspannungsabnahme. Bei Weiterbewegung in Rück-Richtung nimmt die Scherspannung in Gegenrichtung wieder zu, und bei der erneuten Hin-Querbewegung bis zum Bewegungsmittelpunkt nimmt die Gegen-Scherspannung wieder ab.

Die Kombination dieser 4 Bewegungsanteile führt überraschend zu einem deutlich verbesserten Ablöseprozess.

Die Bewegungsgeschwindigkeit kann in weiten Bereichen an die Erfordernisse angepasst werden. Es ist auch möglich, die Querbewegungsauslenkung und die sonstigen Bewegungsparameter an die zu erzeugende Struktur an der je betrachteten Stelle anzupassen. So können bei größeren Strukturen, also Strukturen, bei denen eine größere Kontaktfläche zwischen Folie und Struktur besteht, die Anzahl der Querbewegungen erhöht und/oder die Frequenz der Querbewegungen erhöht werden.

Umgekehrt können bei ganz kleinen Strukturen, also etwa beim Beginn des Bauprozesses in der Stereolithographie-Vorrichtung, auch ganz geringe Auslenkungen ausreichen, beispielsweise auch nur eine Hin-Querbewegung und eine Rück-Querbewegung.

Betrachtet man die Folie und die Struktur als ein verbundenes Gebilde, entsteht die Trennung zwischen diesen durch die Wechsellast an der Sollbruchstelle, nämlich an der Schnittstelle zwischen Folie und Struktur.

In vorteilhafter Ausgestaltung beginnt die Querbewegung mit der Lösebewegung.

Es ist aber auch möglich, die Querbewegung vor oder nach der Lösebewegung beginnen zulassen, beispielsweise im Abstand von 0,5 sek. 1 sek. oder 2 sek. oder bis zu 5 sek. bei größeren Strukturen.

Bevorzugt überlagert eine Mehrzahl von Querbewegungen die Lösebewegung. Dies können beispielsweise 1, 2, 3, 4 oder aber auch 10 oder gar 20 Querbewegungen sein. Die Amplitude der Querbewegung kann ebenfalls in weiten Bereichen an die Erfordernisse angepasst werden und beispielsweise etwa 5 mm betragen.

An die Lösebewegung, also die vertikale Bewegung der Bauplattform relativ zur Glasplatte der Wanne, schließt sich bevorzugt eine Hebebewegung an. Während der Lösebewegung besteht noch ein mindestens minimaler Kontakt zwischen Folie und Struktur, während anschließend, also während der Hebebewegung, kein Kontakt mehr besteht.

Die erfindungsgemäße Steuervorrichtung steuert sämtliche Bewegungen, also Hebebewegung, Lösebewegung und die Querbewegungen. Sie weist auch geeignete Sensoren auf, um die Bewegungen regeln zu können.

Die Steuervorrichtung steuert auch die Geschwindigkeit der Bewegungen, nämlich der Querbewegungen und der Lösebewegung, besonders genau, beispielsweise in Abhängigkeit von dem verwendeten Material der Struktur, der Größe der Struktur und dem Material und der Art der Folie.

Die Hebebewegung ist hingegen weitgehend materialunabhängig und kann beispielsweise mit maximaler Geschwindigkeit erfolgen, ebenfalls gesteuert von der Steuervorrichtung. Dies gilt insbesondere für die Zeit nach der Trennung.

In modifizierter Ausgestaltung ist es vorgesehen, dass eine Hin-Querbewegung einer Lösebewegung überlagert ist und die Zurück-Querbewegung außerhalb der Zeit der Lösebewegung erfolgt.

In weiterer modifizierter Ausgestaltung ist es vorgesehen, dass die Steuervorrichtung die Bewegungen so steuert, dass jede Querbewegung endet, bevor die Lösebewegung abgeschlossen ist.

Die Steuervorrichtung lässt sich hinsichtlich der Geschwindigkeiten in weiten Bereichen an die Erfordernisse anpassen. Einzelheiten hierzu lassen sich beispielsweise aus den Unteransprüchen 6, 7, 9 und 10 entnehmen.

In vorteilhafter Ausgestaltung ist es insofern vorgesehen, dass an jeder Endposition der Querbewegung ein Zwischenhalt vorgesehen ist und dass die Querbewegungen von der Steuervorrichtung so gesteuert werden, dass die Zwischenhalte kürzer oder länger als die Bewegungsperioden sind.

Für die praktische Realisierung der Antriebe für die Bewegungen ist bevorzugt für die Vertikalbewegung, also die Lösebewegung und die Hebebewegung, ein Linearmotor oder ein Schrittmotor mit einer Zahnstange vorgesehen, und für die Querbewegung entweder ebenfalls ein solcher Linearantrieb mit den beiden für den Vertikalantrieb dargestellten Möglichkeiten, oder der Einfachheit halber ein Motor, der mit einem Kurbelantrieb verbunden ist.

Durch den mit konstanter Geschwindigkeit laufenden Motor wird durch den Kurbelantrieb eine Sinusbewegung als Querbewegung realisiert. Erfindungsgemäß ist es vorgesehen, dass die Bewegungen zwischen der Bauplattform einerseits und der Wanne andererseits erfolgen. Die Bauplattform trägt die Struktur, und an der Wanne ist die Folie eingespannt.

Weitere Vorteile, Einzelheiten und Merkmale ergeben sich aus der nachfolgenden Beschreibung mehrerer Ausführungsbeispiele der Erfindung anhand der Zeichnung.

Es zeigen:
- Fig. 1: eine schematische perspektivische Ansicht einer nicht erfindungsgemäßen Stereolithographie-Vorrichtung;
- Fig. 2: eine Bewegungskurve der Vertikalbewegung und der Querbewegung in einer Ausführungsform der erfindungsgemäße Stereolithographie-Vorrichtung;
- Fig. 3: eine Bewegungskurve der Vertikalbewegung und der Querbewegung in einer anderen Ausführungsform der erfindungsgemäßen Stereolithographie-Vorrichtung;
- Fig. 4: eine schematische Ansicht der nicht erfindungsgemäßen Vorrichtung während des Lösens der Folie von der Struktur; und
- Fig. 5: eine schematische Ansicht der nicht erfindungsgemäßen Vorrichtung kurz nach dem Lösen der Folie von der Struktur, in einer modifizierten Ausführungsform

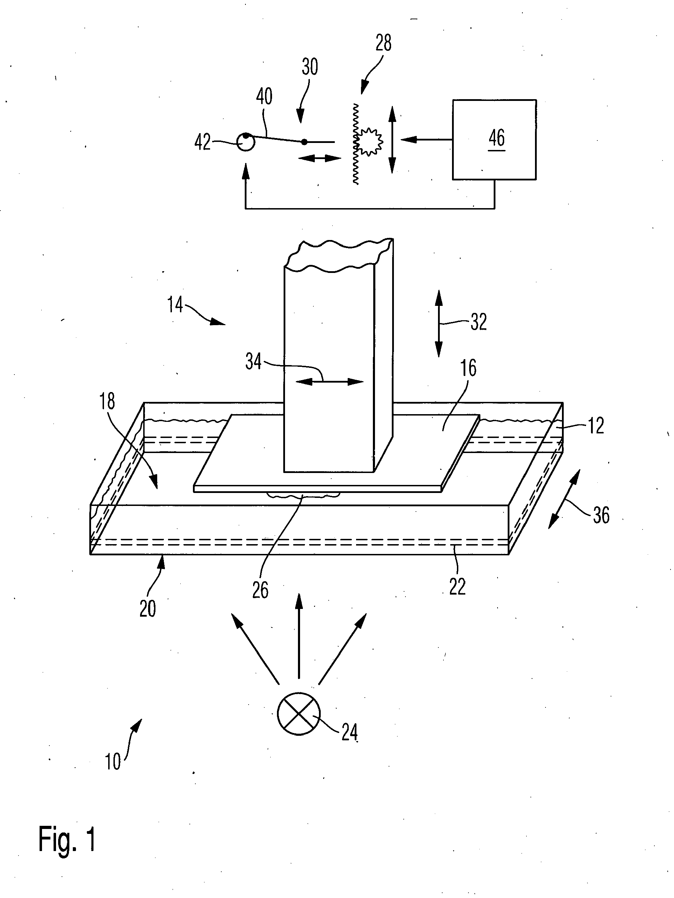

Fig. 1 zeigt eine nicht erfindungsgemäße Stereolithographie-Vorrichtung 10, die dem Grund nach einen an sich bekannten Ausbau hat.

Es ist eine Wanne 12 vorgesehen, in die hinein eine Bauplattform 14 absenkbar und eintauchbar ist. Die Bauplattform 14 trägt an ihrem unteren Ende eine Bauplatte 16. Die Wanne 12 ist mit Druckmaterial 18 befüllt. In das Bad aus Druckmaterial 18 ist die Bauplatte 16 absenkbar.

Die Wanne 12 hat an ihrer Unterseite eine Glasplatte 20. Die Glasplatte 20 erstreckt sich unterhalb einer Folie 22, die den Boden der Wanne 12 bildet, entweder an der gesamten Unterseite oder mindestens an einem großen, bevorzugt zentralen Teil der Unterseite der Wanne 12 und ist transparent.

Die Glasplatte 20 ist insofern mit der elastischen und transparenten, also lichtdurchlässige Folie 22 bedeckt. Die Folie 22 ist umlaufend eingespannt gehalten. Hierzu ist ein Rahmen vorgesehen, der ebenfalls an sich bekannter Weise der Fixierung des Randes der Folie 22 an der Wanne 12 dient.

Die Folie 22 ist elastisch und besteht aus einem transparenten Elastormer oder einem anderen geeigneten Material.

Unterhalb der Glasplatte 20 ist eine Lichtquelle 24 vorgesehen, die nach oben, also zur Glasplatte 20 hin, strahlt. Die Lichtquelle 24 kann beispielsweise ein Laserstrahl sein, und es kann eine zweidimensional bewegliche Ablenkvorrichtung vorgesehen sein, die nicht dargestellt ist und die den Laserstrahl an die gewünschte Stelle der Glasplatte 20 lenkt.

An dieser Stelle durchtritt der Laserstrahl die Glasplatte 20 und die Folie 22 und fällt auf Druckmaterial 18. 0,5

Das Druckmaterial 18 ist fließfähig und lichthärtbar, so dass es an der Stelle, an der es durch die Lichtquelle 24 belichtet wird, aushärtet.

Alternativ zu der hier beschriebenen Kombination des Lasers mit der Ablenkvorrichtung ist es auch möglich, eine vollflächig strahlende Lichtquelle 24 mit einer Belichtungssteuervorrichtung zu verwenden. Diese liegt an der Glasplatte 20 unten auf und weist Pixel auf, die je separat steuerbar schwarz oder durchlässig betreibbar sind. Alternativ erfolgt die Belichtung über einen DMD, der an der Lichtquelle verbaut ist, und die dort austretende Lichtstrahlung wird direkt oder über Umlenkspiegel und optische Elemente im Lichtpfad auf die Fokusebene projiziert.

Mit einer solchen, ebenfalls nicht dargestellten Belichtungssteuervorrichtung lässt sich in einem Zug eine Schicht Druckmaterial 18 entsprechend der gewünschten Pixelanordnung belichten und damit aushärten.

Beim Beginn des Aufbaus einer Struktur 26, also beim Beginn des sogenannten Bauprozesses, wird die Bauplattform 14 sehr weit abgesenkt. Die Bauplatte 16 erstreckt sich mir ihrer Unterseite in einer Höhe von 0,08 mm oberhalb der Folie 22.

Die erste Schicht wird nun belichtet. Eine solche Schicht entsteht mit einer entsprechend gewählten Schichtdicke, wie beispielsweise 0,08 mm und wird auch als Slice bezeichnet.

Für die Erzeugung der nächsten Schichtdicken muss zum einen die Folie 22 von dem ausgehärteten Druckmaterial 18, das nunmehr als Struktur 26 vorliegt, von der Struktur 26 gelöst werden und zum anderen die Bauplattform 14 angehoben werden, so dass neues Druckmaterial 18 die Folie 22 vollständig bedeckt und die nächste Schicht erzeugt werden kann. Die Struktur 26 ist in Fig. 1 schematisch dargestellt.

Es versteht sich, dass auch beliebige andere Schichten möglich sind, beispielsweise Schichtdicken zwischen 0,03 mm und 0,8 mm oder sogar darüber hinaus.

Für die vertikale Bewegung der Bauplattform 14, die mit der Bauplatte 16 und der dort unten anhaftende Struktur 26 verbunden ist, ist eine Hubvorrichtung 28 vorgesehen. Auch wenn die Hubvorrichtung 28, die in Fig. 1 schematisch dargestellt ist, für eine vertikale Bewegung ausgelegt ist, versteht es sich, dass anstelle dessen auch eine gegenüber der vertikalen leicht schräge Bewegung auch von der Formulierung "vertikal" umfasst sein soll, beispielsweise eine solche, die um +/- 20° von der Vertikalen abweicht.

Die vertikale Bewegung besteht aus einer vertikalen Lösebewegung 32, während welcher sich die Folie 22 von der Struktur 26 löst, und einer Hebebewegung 50, die sich nach oben hieran anschließt. Während der Hebebewegung 50 kann das Druckmaterial 18 besser in den Bereich unterhalb der Struktur 26 einfließen.

Je nach Viskosität des Druckmaterials 18 ist es auch möglich, auf die Hebebewegung 50 teilweise oder vollständig zu verzichten, also dann, wenn das Druckmaterial 18 sehr dünnflüssig ist. Bei viskoseren Druckmaterial 18 ist es günstig, für die Hebebewegung 50 3 bis 10 mm vorzusehen, die sich an die Lösebewegung 32 anschließen.

Erfindungsgemäß ist es vorgesehen, zusätzlich zu der Hubvorrichtung 28 einen Querantrieb 30 zu realisieren. Der Querantrieb 30 erzeugt Querbewegungen.

Die Querbewegungen 34 erstrecken sich nicht erfindungsgemäß rechtwinklig zur Lösebewegung 32. Erfindungsgemäß verläuft die Querbewegung 34 in einem Winkel zwischen 60 Grad und 120 Grad relativ zur Lösebewegung 32, wobei der Winkel zwischen der Quer- und der Lösebewegung von 90 Grad abweicht.

Nachdem die Wanne 12 die Folie 22 eingespannt hält und an der Bauplattform 14 die Struktur 26 haftet, entsteht insofern gleichzeitig auch eine im wesentlichen horizontale Querbewegung 34 zwischen der Struktur 26 und der elastischen Folie 22.

Im dargestellten nicht erfindungsgemäßen Ausführungsbeispiel ist die Lösebewegung 32 vertikal und die Querbewegung 34 horizontal. Beide Bewegungen verlaufen insofern in einem Winkel vom 90° zueinander. Erfindungsgemäß verläuft die Querbewegung 34 in einem Winkel zwischen 60 Grad und 120 Grad oder auch 80° und 100° relativ zur Lösebewegung 32, wobei der Winkel zwischen der Quer- und der Lösebewegung von 90 Grad abweicht.

Die vertikale Achse wird typischerweise als Z-Achse bezeichnet, so dass die vertikale Bewegung, die die Lösebewegung 32 einschließt, als Bewegung in Z-Richtung angesehen werden kann. Die in der Zeichnungsebene horizontale Richtung wird typischerweise als X-Richtung bezeichnet, also die entsprechende Bewegung als Bewegung in X-Richtung.

Die 3. Raumachse zu diesen beiden Richtungen, die in der Zeichnung gemäß Fig. 1 schräg nach hinten verläuft, ist dann die Y-Richtung 36, also die Bewegung in Richtung der Y-Achse.

In dem hier dargestellten nicht erfindungsgemäßen Ausführungsbeispiel ist die Querbewegung 34 als in Richtung der X-Achse verlaufend dargestellt. Es ist jedoch genauso möglich und nicht erfindungsgemäß eine Querbewegung 34 in Y-Richtung 36 zu realisieren, oder auch eine Mischform, also die Querbewegung 34 als Bewegung mit einer Bewegungskomponente in X-Richtung und eine Bewegungskomponente in Y-Richtung 36 zu realisieren.

Erfindungsgemäß ist die Querbewegung 34 so realisiert, dass sie wechselnde Bewegungsrichtungen hat. Dies bedeutet, dass wenn in einem ersten Schritt eine Erst-Querbewegung 54 in einer Richtung verläuft, eine Zweit-Querbewegung 56 in einer anderen, hiervon abweichenden Richtung verläuft. Die Zweit-Querbewegung 56 kann sich von der Erst-Querbewegung 54 um einen beliebigen Winkel unterscheiden, welcher erfindungsgemäß ist, solange er zwischen 60° und 120° relativ zur Lösebewegung liegt und nicht 90° beträgt.

Die Dritt-Querbewegung 58 hat wiederum von der Zweit-Querbewegung 56 einen sich unterscheidende Bewegungsrichtung. Die Richtung der Erst-Querbewegung 54 und der Dritt-Querbewegung 58 kann sich voneinander unterscheiden und ist erfindungsgemäß, solange der Winkel der Richtung zwischen 60° und 120° relativ zur Lösebewegung liegt und nicht 90° beträgt. sie kann aber auch gleich sein. Im zweiten Fall, also bei Bewegungsgleichheit zwischen Erst-Querbewegung 54 und Zweit-Querbewegung 56 ist die Querbewegung 34 eine hin- und hergehende Bewegung.

Im einfachsten Falle verläuft die Bewegung in X-Richtung oder in Y-Richtung 36 periodisch. Der Querantrieb 30, der in Fig. 1 schematisch dargestellt ist, kann dann als Kurbelantrieb mit einer Kurbel 40 ausgebildet sein. Die Kurbel 40 wird in an sich bekannter Weise von einem Kurbelrad 42 angetrieben, so dass sich eine sinusförmige Querbewegung 34 ergibt, unter der Voraussetzung, dass das Kurbelrad 42 mit einer konstanten Geschwindigkeit angetrieben wird. Anstelle der hier dargestellten einfachsten Form der Querbewegung 34 sind beliebige andere Bewegungsformen möglich. Beispielsweise kann der Querantrieb 30 als Linearantrieb ausgebildet sein. Der Linearantrieb kann zweidimensional realisiert sein, also in X-Richtung und in Y-Richtung 36.

Ein solcher Antrieb lässt sich beispielsweise mit einer Zahnstange und einem Zahnrad realisieren. Über den Ort betrachtet kann die Bewegung dann beispielsweise quadratisch sein.

Nicht erfindungsgemäß kann die Querbewegung 34 auch eine beliebige andere Form in der X/Y-Ebene haben. Beispielsweise lässt sich auch eine Dreiecksform oder eine andere Mehreckform realisieren, oder ein Mehreck mit abgerundeten Ecken.

Auch ist eine elliptische Form der Querbewegung 34 möglich. Diese lässt sich beispielsweise mit zwei zueinander senkrechten Kurbelantrieben realisieren, von denen eine Kurbel 40 eine geringere und die andere eine größere Auslenkung hat.

Erfindungsgemäß wichtig ist es, dass die Querbewegung 34 nicht einseitig erfolgt, sondern zweiseitig oder mehrseitig. Erst damit ergibt sich der Effekt der Ablösung der Struktur 26 von der Folie 22. Wann die Ersttrennung, also der Beginn der Ablösung, erfolgt, hängt stark von den Umständen des Einzelfalles ab; sie kann z.B. auch bereits beim Beginn der Erstbewegung erfolgen, oder aber nach mehreren Hin- und Herbewegungen.

Die Querbewegung 34 kann auch eine Art Schaukelbewegung sein, also eine Bewegung, bei der sie zusätzlich auslenkungsabhängig eine vertikale Komponente hat.

Eine Steuervorrichtung 46 steuert die Hubvorrichtung 28 und den Querantrieb 30, damit die Lösebewegung und die Querbewegungen, aber auch die Belichtung über die Lichtquelle 24 und damit die gesamte Stereolithographie-Vorrichtung 10.

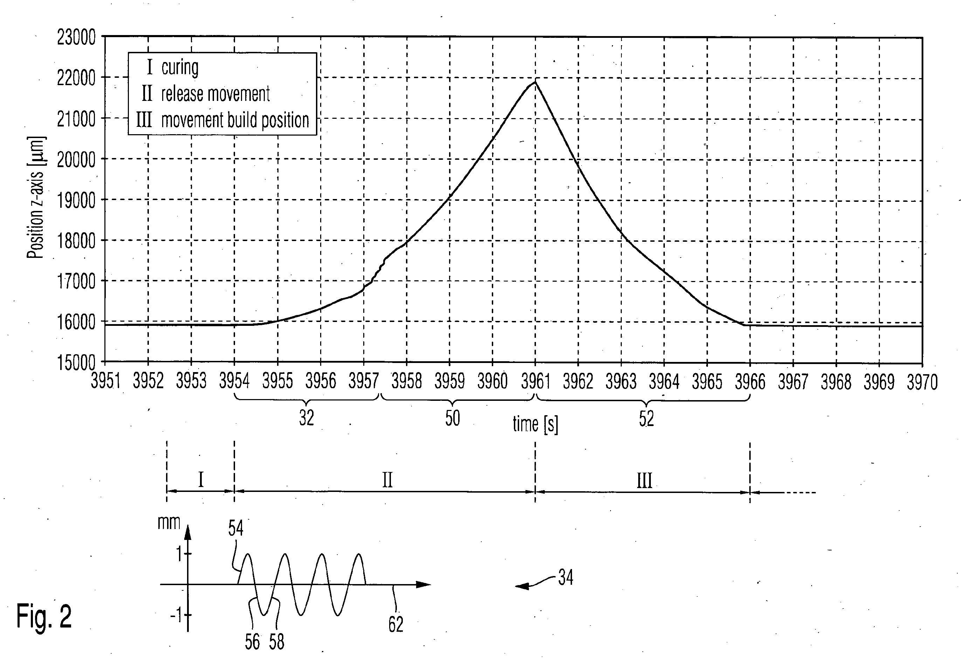

Ein einfaches Beispiel einer erfindungsgemäßen Querbewegung 34 ist in Fig. 2 dargestellt. Im oberen Diagramm in Fig. 2 ist die vertikale Bewegung oder Hubbewegung dargestellt, die sich aus einer Lösebewegung 32 und einer Hebebewegung 50 zusammensetzt.

Gemäß dem Diagramm gemäß Fig. 2 ist die vertikale Position der Bauplattform 14, also die Position in Richtung der Z-Achse über die Zeit dargestellt. Der hier diskutierte Zeitabschnitt umfasst die Zeit zwischen 2 Belichtungen.

Die erste Belichtung ist mit dem Zeitabschnitt I bezeichnet und endet bei 3954 sek. Der zweite Zeitabschnitt II ist die Lösebewegung 32 und die Hebebewegung 50. Die Lösebewegung 32 endet bei etwa 3957,5 sek, und die Hebebewegung 50 dauert zwischen dem Zeitpunkt 3957,5 sek. und dem Zeitpunkt 3961 sek.

Hieran schließt sich der Zeitabschnitt III an, der die Absenkbewegung 52 zeigt. Diese dauert von 3961 bis 3966 sek. Hieran schließt sich ein weiterer Belichtungsschritt an, gegebenenfalls nach einer Ruhezeit.

Wie ersichtlich ist, erfolgt die erste Belichtung im Zeitabschnitt I bei einer Z-Position von deutlich weniger als 16 mm, und die zweite Belichtung II nach der Absenkbewegung 52 bzw. der Zustellbewegung erfolgt bei einer Z-Position von nur etwas weniger als 16 mm. Die Differenz entspricht einer Schichtstärke und beträgt etwa 0,08 mm.

Die erfindungsgemäße Querbewegung 34 ist unter dem Diagramm aufgetragen und verläuft an hin- und hergehende Bewegung. Die Querbewegung 34 beginnt bei 3954 sek. Sie startet mit einer Erst-Querbewegung 54 im ersten steigenden Ast der dargestellten Sinuskurve.

An die Erst-Querbewegung 54 schließt sich eine hierzu entgegengesetzte Zweit-Querbewegung 56 an, die über den Nulldurchgang 62 der Querbewegung 34 hinausgeht und eine Auslenkung in negative Richtung hat, entsprechend dem Verlauf einer Sinuswelle.

Hieran schließt sich eine Dritt-Querbewegung 58 an, die wiederum von der negativen Auslenkung ausgeht und den Nulldurchgang 62 der Querbewegung 34 durchschreitet und dann den gleichen Maximalwert in positiver Richtung erreicht wie die Erst-Querbewegung 54.

Erfindungsgemäß sind Bewegungsrichtungswechsel der Querbewegung 34 vorgesehen.

In dem dargestellten Ausführungsbeispiel sind während der Lösebewegung 32 sieben Bewegungsrichtungswechsel vorgesehen.

Es versteht sich, dass jedenfalls mehr als ein Bewegungsrichtungswechsel erfindungsgemäß vorgesehen sind, beispielsweise 2, 3 oder mehrere. Es können beispielsweise auch bis zu 20 Bewegungsrichtungswechsel vorgesehen sein, oder sogar noch mehrere.

Gegen Ende der Lösebewegung 32 wird die Ablösegeschwindigkeit, also die Schnelligkeit der Lösebewegung 32 in Z-Richtung etwas erhöht. In diesem Zustand hat die Folie 22 nur noch ganz geringen Kontakt mit der Struktur 26, so dass geringe Haltekräfte bestehen.

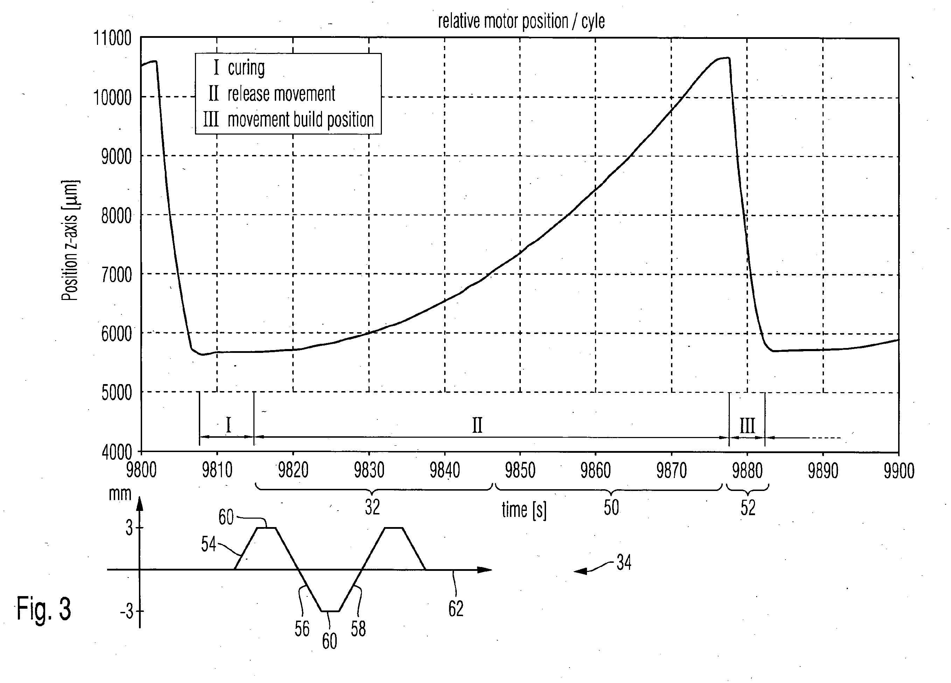

In Fig. 3 ist eine demgegenüber modifizierte Steuerung dargestellt. Dort wie in den weiteren Figuren weisen gleiche Bezugszeichen auf gleiche oder entsprechende Teile hin und bedürfen keiner weiteren Erwähnung.

Wie aus Fig. 3 ersichtlich ist, verläuft bei dieser Ausführungsform die Lösebewegung 32 und die sich daran anschließende Hebebewegung 50 mit zunehmender Geschwindigkeit.

Die Querbewegung 34 hat einen im wesentlichen trapezförmigen Verlauf. Zwischen den einzelnen Querbewegungen 34 ist je ein kurzer Zwischenhalt 60 eingebaut, die der Entspannung der Folie 22 dient.

Die Zwischenhalte 60 sind je im maximal ausgelenkten Zustand vorgesehen, so dass in diesem Zustand die Folie 22 unter Spannung gehalten wird und sich von selbst ablöst.

Es versteht sich, dass anstelle dessen beliebige andere Bewegungsformen und Bewegungszeiten möglich sind, ohne dem Bereich der Erfindung zu verlassen. Beispielsweise kann die Querbewegung 34 im Bereich des Nulldurchgangs 62 beschleunigt und bei maximaler Auslenkung 64 und 66 verlangsamt sein, ähnlich der in Fig. 3 dargestellten Sinusbewegung, aber auch in beliebiger anderer Form.

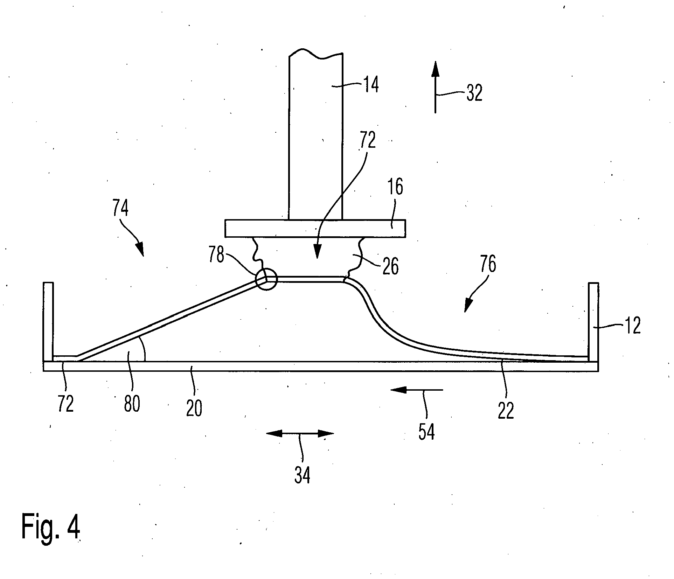

Aus Fig. 4 ist eine weitere Ausführungsform der nicht erfindungsgemäßen Stereolithographie-Vorrichtung ersichtlich. Die Bauplattform 14 weist einen Vertikalantrieb auf und die Wanne 12 einen Horizontalantrieb. Entsprechend wird die Querbewegung 34 von der Wanne 12 geleistet, und die Vertikalbewegung, also zum Beispiel die Lösebewegung, von der Bauplattform 14.

Die Bauplatte 16 der Bauplattform 14 trägt die bereits fertiggestellte Struktur 26.

In dem dort dargestellten Zustand ist die Belichtung der betreffenden Schicht der Struktur 20 bereits erfolgt.

Die Folie 22 ist an einem Rahmen 70 an den Rändern mit der Wanne 12 verbunden und liegt im entspanntem Zustand auf der Glasplatte 20 auf, die den Boden der Wanne 12 bildet.

In diesem Zustand ist die Folie 22 durch die Fixierung an dem Rahmen 70 unter leichter Spannung.

Wenn nun die Lösebewegung 32 eingeleitet wird, wird dieser eine Querbewegung 34 überlagert. Im dargestellten Ausführungsbeispiel ist der Moment der abgeschlossen Hin-Querbewegung 54 dargestellt. In diesem Zustand ist die Wanne 12 nach links verschoben, bezogen auf die Darstellung gemäß Fig. 4. Die Folie 22 haftet in ihrem mittleren Bereich 72 noch an der Struktur 26. Hierdurch wird der linke Bereich 74 der Folie 22 unter Spannung gesetzt, während der rechte Bereich 76 biegeschlaff wird..

Die Spannung im Bereich 74 führt dazu, dass der sich am weitesten links erstreckende Teil des mittleren Bereichs 72 gedehnt wird. Die Struktur 26 ist andererseits deutlich weniger elastisch als die Folie 22. Dies führt zu einer Mikroverlagerung von Teilen der Folie 22 an dieser Stelle, die in Fig. 4 mit dem Bezugszeichen 78 dargestellt ist. Diese Mikrodehnung bzw. Relativbewegung in Querrichtung führt zum Beginn des Ablösens.

Durch die Überlagerung der Hin-Querbewegung 54 der Wanne 12 mit der vertikalen Lösebewegung 32 der Bauplattform 14 ergibt es sich, dass die Folie 22 zugleich einseitig, also im Bereich 74, gespannt wird und angehoben wird. An der Stelle 78 wird eine Scherkraft in die Folie 22 eingeleitet, die hinsichtlich ihrer Ausrichtung von dem in Fig. 4 eingezeichneten Winkel 80 abhängt. Dieser Scherwinkel 80 ergibt sich aus der Schrägstellung des Bereichs 74 kurz vor dem Ablösebeginn.

Der betreffende Winkel kann beispielsweise zwischen 0,1 und 20° liegen, und beträgt im Beispielsfalle 3°.

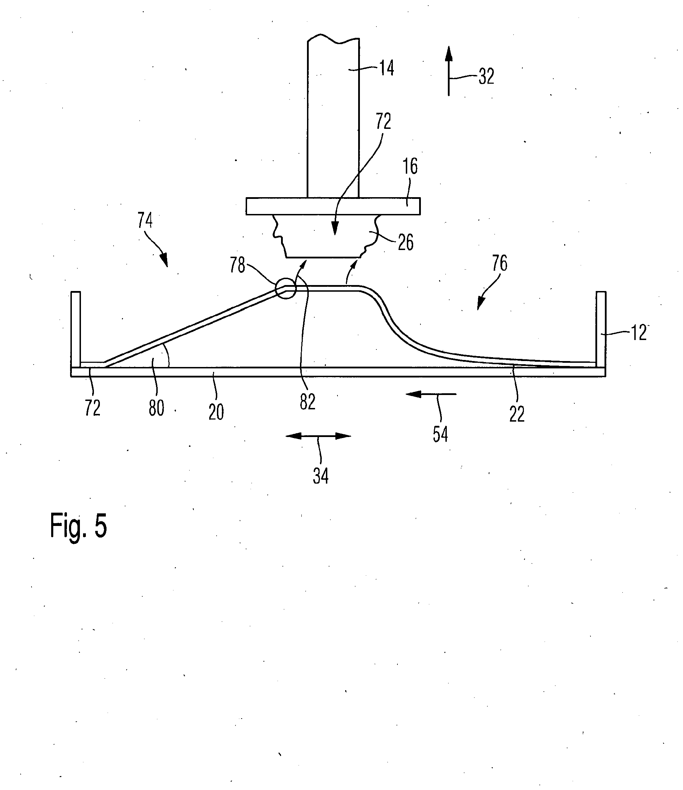

Aus Fig. 5 ist eine schematische Ansicht der nicht erfindungsgemäßen Vorrichtung kurz nach dem Lösen der Folie von der Struktur ersichtlich. Die Folie 22 hat sich im betrachteten Zeitpunkt soeben von der Struktur 26 gelöst und ist im Begriff, sich in Richtung des entspannten Zustands auf der Glasplatte 20 zu bewegen.

Wie aus Fig. 5 ersichtlich ist, ist der Kontaktbereich der Folie 22 mit der Struktur 26 (vgl. Fig. 4) nach links versetzt. Die Querbewegung 34 verläuft bei dieser Ausführungsform in einem etwas schrägen Winkel 82 von etwa 80 Grad zur Lösebewegung 32.

Bevorzugt ist es, dass die Bauplattform 14 und die Wanne 12 zueinander orthogonal sind. Jedoch ist es im Einzelfall, in Form einer modifizierten erfindungsgemäßen Ausgestaltung, auch möglich, zur Bereitstellung des genannten Schrägstellungswinkels von der Orthogonalität abzuweichen, bevorzugt, indem die Hubvorrichtung 28 eine schräge Ausrichtung erfährt, aber die Wanne 12, die mit flüssigem Druckmaterial gefüllt ist, horizontal verbleibt.

## Patentansprüche

1. Stereolithographie-Vorrichtung (10), mit einer Bauplattform (14) und einer Wanne (12), in welche die Bauplattform (14) eintauchbar ist, wobei unten in oder an der Wanne (12) eine lichtdurchlässige Folie (22) ausgebildet oder angeordnet ist, die elastisch verformbar ist, und mit einer Lichtquelle (24) oder Energiequelle unterhalb der Folie (22), wobei die Wanne (12) mit fließfähigem Druckmaterial (18) befüllbar ist, wobei eine Steuervorrichtung (46) die Bewegung der Bauplattform (14) relativ zur Folie (22) steuert und wobei die Steuervorrichtung (46) der im wesentlichen vertikalen Lösebewegung (32), die als Bewegung der Bauplattform (14) ausgebildet ist, zwischen einer Schicht einer per Stereolithographie (10) an der Bauplattform (14) erzeugten Struktur (26) und der Folie (22), eine , insbesondere translatorische, Querbewegung (34), die als Bewegung der Wanne (12) ausgebildet ist, überlagert, welche Querbewegung (34) wechselnde Bewegungsrichtungen hat, insbesondere hin- und hergehende, **dadurch gekennzeichnet, dass** die Querbewegung (34) in einem Winkel zwischen 60 Grad und 120 Grad relativ zur Lösebewegung (32) verläuft, wobei der Winkel zwischen der Quer- und der Lösebewegung von 90 Grad abweicht.

2. Stereolithographie-Vorrichtung (10) nach Anspruch 1, **dadurch gekennzeichnet,**
**dass** die Querbewegung (34) eine periodische Bewegung ist, mit einer Bewegungsamplitude von weniger als 0,03 cm bis 2cm, insbesondere 0,8mm bis 15mm und besonders bevorzugt etwa 5mm.

3. Stereolithographie-Vorrichtung (10) nach einem der vorherigen Ansprüche, da-
durch gekennzeichnet, dass die Steuervorrichtung (46) die Querbewegung (34) so steuert, dass mit der Lösebewegung (32) die Querbewegung (34) beginnt, insbesondere mit einer Abweichung von 1 Sekunde oder weniger.

4. Stereolithographie-Vorrichtung (10) nach einem der vorherigen Ansprüche, da-
durch gekennzeichnet, dass eine Mehrzahl von Querbewegungen (34), insbesondere 2 bis 10, bevorzugt 3 oder 4, die Lösebewegung (32) überlagert.

5. Stereolithographie-Vorrichtung (10) nach einem der vorherigen Ansprüche, **dadurch**
**gekennzeichnet, dass** die Lösebewegung (32) bis zur Ablösung der Folie (22) von der Struktur (26) mit einer ersten Geschwindigkeit erfolgt, insbesondere mit einer im wesentlichen konstanten Geschwindigkeit, und nach der Ablösung mit einer zweiten Geschwindigkeit, die gleich der ersten Geschwindigkeit oder höher als die erste Geschwindigkeit ist.

6. Stereolithographie-Vorrichtung (10) nach einem der vorherigen Ansprüche, da-
durch gekennzeichnet, dass zu der Querbewegung (34) eine Hin-Querbewegung (54) und eine Rück-Querbewegung (56) gehört,

7. Stereolithographie-Vorrichtung (10) nach einem der vorherigen Ansprüche, da-
durch gekennzeichnet, dass die Steuervorrichtung (46) die Lösebewegung (32) so steuert, dass die vertikale Geschwindigkeit zunächst zunimmt und anschließend die Geschwindigkeit reduziert.

8. Stereolithographie-Vorrichtung (10) nach einem der vorherigen Ansprüche, da-
durch gekennzeichnet, dass die Amplitude der Lösebewegung (32) sich um weniger als die Hälfte, bevorzugt weniger als 1/3, von der Amplitude der Querbewegung (34) unterscheidet.

9. Stereolithograpie-Vorrichtung (10) nach einem der vorherigen Ansprüche, **dadurch**
**gekennzeichnet, dass** für die Querbewegung (34) ein Motor, mit einem Kurbelantrieb verbunden ist, der insbesondere die Wanne (12) bewegt, und der basierend auf einem Ausgangssignal der Steuervorrichtung (46) die Querbewegung (34) erzeugt, und ein im wesentlichen sinusförmiges Geschwindigkeitsprofil bereitstellt.

10. Stereolithographie-Vorrichtung (10) nach einem der vorherigen Ansprüche, **dadurch gekennzeichnet, dass** die Steuervorrichtung (46) zwischen der Hin-Querbewegung (54) und der Rück-Querbewegung (56), zur Kompensation der Ablöseträgheit, einen Zwischenhalt (60) der Querbewegung (34) steuert, und insbesondere auch zwischen der Rück-Querbewegung und der Hin-Querbewegung (54), wobei insbesondere beide Zwischenhalte (60) im wesentlichen gleich lang sind oder sich um höchstens 20% in ihrer Länge unterscheiden.

11. Stereolithographie-Vorrichtung (10) nach einem der vorherigen Ansprüche, da-
durch gekennzeichnet, dass die Lösebewegung (32) zwischen 1 Sekunden und 30 Sekunden und insbesondere etwa 4 Sekunden dauert und eine Hin-Querbewegung (54) zwischen 0,2 Sekunden und 8 Sekunden und insbesondere etwa 1 Sekunde.

12. Verfahren zum Betrieb einer Stereolithographie-Vorrichtung (10), bei welcher eine Bauplattform (14) in eine mit fließfähigen Druckmaterial (18) gefüllte Wanne (12) eingetaucht wird, wobei unten in oder an der Wanne (12) eine lichtdurchlässige Folie (22) ausgebildet und angeordnet ist, welche Folie (22) elastisch formbar ist, und wobei unterhalb der Folie (22) eine Lichtquelle (24) oder eine Energiequelle angeordnet ist, wobei die Bewegung der Bauplattform (14) relativ zur Folie (22) von einer Steuervorrichtung (46) gesteuert wird und die Steuervorrichtung (46) eine Struktur (26) an der Bauplattform (14) in Schichten, erzeugt und die Folie (22) an der erzeugten Schicht durch eine im wesentlichen vertikale Lösebewegung (32), die als Bewegung der Bauplattform (14) ausgebildet ist, von der Struktur (26) löst und dass die Lösebewegung (32) mit einer, insbesondere translatorischen, Querbewegung (34), die als Bewegung der Wanne (12) ausgebildet ist, überlagert wird, und in wechselnden Bewegungsrichtungen, insbesondere periodisch, erfolgt, **dadurch gekennzeichnet, dass** die Querbewegung (34) in einem Winkel zwischen 60 Grad und 120 Grad relativ zur Lösebewegung (32) erfolgt, wobei der Winkel zwischen der Quer- und der Lösebewegung von 90 Grad abweicht.

13. Verfahren nach Anspruch 12, **dadurch gekennzeichnet, dass** die Querbewegung (34) in Hin-Richtung und in Rück-Richtung erfolgt und beide Bewegungen mit einer sinusförmigen Geschwindigkeit ablaufen

14. Verfahren nach Anspruch 12 oder 13, **dadurch gekennzeichnet, dass** die Lösebewegung (32) zwischen 1mm und 15mm und bevorzugt etwa 7mm beträgt und die Querbewegung (34) pro Periode zwischen 0,6mm und 10mm, bevorzugt etwa 3mm.

15. Verfahren nach einem der Ansprüche 12 bis 14, **dadurch gekennzeichnet, dass** die Überlagerung der Querbewegung (34) mit der Lösebewegung (32) so von der Steuervorrichtung (46) vorgenommen wird, dass die Lösebewegung (32) während der Hin-Querbewegung (54), des Zwischenhalts (60), der Rück-Querbewegung (56) und des zweiten Zwischenhalts (60) fortgesetzt wird.

## Claims

1. A stereolithography apparatus (10), comprising a build platform (14) and a tray (12), into which the build platform (14) can be immersed, wherein at the bottom in or on the tray (12) a light-transmissive film (22) is formed or arranged which is elastically deformable, and comprising a light source (24) or energy source underneath the film (22), wherein the tray (12) can be filled with flowable printing material (18), wherein a control apparatus (46) controls the movement of the build platform (14) relative to the film (22) and wherein the control apparatus (46) superimposes upon the substantially vertical release movement (32), which is configured as a movement of the build platform (14), between a slice of a structure (26) produced by stereolithography (10) on the build platform (34) and the film (22) an in particular translational transverse movement (34), which is configured as a movement of the tray (12), which transverse movement (34) has alternating, in particular reciprocating, movement directions, **characterized in that** the transverse movement (34) extends at an angle between 60 degrees and 120 degrees relative to the release movement (32), wherein the angle between the transverse movement and the release movement deviates from 90 degrees.

2. The stereolithography apparatus (10) as claimed in claim 1, **characterized in that**
the transverse movement (34) is a periodic movement, having a movement amplitude of less than 0.03 to 2 cm, in particular 0.8 mm to 15 mm and particularly preferably about 5 mm.

3. The stereolithography apparatus (10) as claimed in any one of the preceding claims, **characterized in that** the control apparatus (46) controls the transverse movement (34) such that the transverse movement (34) begins with the release movement (32), in particular with a deviation of 1 second or less.

4. The stereolithography apparatus (10) as claimed in any one of the preceding claims, **characterized in that** a plurality of transverse movements (34), in particular 2 to 10, preferably 3 or 4, superimposes the release movement (32).

5. The stereolithography apparatus (10) as claimed in any one of the preceding claims, **characterized in that** until the film (22) is detached from the structure (26), the release movement (32) is effected at a first speed, in particular at a substantially constant speed, and, after detachment, is effected at a second speed which is equal to the first speed or is higher than the first speed.

6. The stereolithography apparatus (10) as claimed in any one of the preceding claims, **characterized in that** the transverse movement (34) includes a forward transverse movement (54) and a rearward transverse movement (56).

7. The stereolithography apparatus (10) as claimed in any one of the preceding claims, **characterized in that** the control apparatus (46) controls the release movement (32) such that the vertical speed initially increases and then the speed decreases.

8. The stereolithography apparatus (10) as claimed in any one of the preceding claims, **characterized in that** the amplitude of the release movement (32) differs by less than half, preferably less than 1/3, from the amplitude of the transverse movement (34).

9. The stereolithography apparatus (10) as claimed in any one of the preceding claims, **characterized in that** for the transverse movement (34) a motor is connected to a crank drive which moves in particular the tray (12) and which produces the transverse movement (34) based upon an output signal from the control apparatus (46), and provides a substantially sinusoidal speed profile.

10. The stereolithography apparatus (10) as claimed in any one of the preceding claims, **characterized in that** the control apparatus (46) controls, between the forward transverse movement (54) and the rearward transverse movement (56), for compensating for the detachment inertia, an intermediate stop (60) of the transverse movement (34), and in particular also between the rearward transverse movement and the forward transverse movement (54), wherein in particular both intermediate stops (60) are substantially equal in length or differ in length by at most 20%.

11. The stereolithography apparatus (10) as claimed in any one of the preceding claims, **characterized in that** the duration of the release movement (32) is between 1 second and 30 seconds and in particular about 4 seconds and the duration of a forward transverse movement (54) is between 0.2 seconds and 8 seconds and in particular about 1 second.

12. A method for operating a stereolithography apparatus (10), in which a build platform (14) is immersed into a tray (12) filled with flowable printing material (18), wherein at the bottom in or on the tray (12) a light-transmissive film (22) is formed and arranged, said film (22) being elastically deformable, and wherein a light source (24) or energy source is arranged underneath the film (22), wherein the movement of the build platform (14) relative to the film (22) is controlled by a control apparatus (46) and the control apparatus (46) produces a structure (26) on the build platform (14) in layers, i.e. slices, and releases the film (22) on the produced slice from the structure (26) by means of a substantially vertical release movement (32), which is configured as a movement of the build platform (14), and that the release movement (32) is superimposed with an in particular translational transverse movement (34), which is configured as a movement of the tray (12), and is effected in alternating movement directions, in particular in a periodic manner, **characterized in that** the transverse movement (34) extends at an angle between 60 degrees and 120 degrees relative to the release movement (32), wherein the angle between the transverse and the release movement deviates from 90 degrees.

13. The method as claimed in claim 12, **characterized in that** the transverse movement (34) is effected in a forward direction and in a rearward direction and both movements take place at a sinusoidal speed.

14. The method as claimed in claim 12 or 13, **characterized in that** the release movement (32) is between 1 mm and 15 mm and is preferably about 7 mm and the transverse movement (34) per period is between 0.6 mm and 10 mm, preferably about 3 mm.

15. The method as claimed in any one of claims 12 to 14, **characterized in that** the transverse movement (34) is superimposed with the release movement (32) by the control apparatus (46) such that the release movement (32) is continued during the forward transverse movement (54), the intermediate stop (60), the rearward transverse movement (56) and the second intermediate stop (60).

## Revendications

1. Dispositif de stéréolithographie (10), avec une plate-forme de construction (14) et une cuve (12) dans laquelle la plate-forme de construction (14) peut être immergée, où un film (22) transparente à la lumière, qui est déformable élastiquement, est formée ou disposée en bas dans ou sur la cuve (12), et avec une source de lumière (24) ou une source d'énergie en dessous du film (22), où la cuve (12) peut être remplie d'un matériau d'impression (18) fluide, où un dispositif de commande (46) commande le mouvement de la plate-forme de construction (14) par rapport au film (22) et où le dispositif de commande (46) superpose au mouvement de détachement (32) essentiellement vertical, qui est conçu comme un mouvement de la plate-forme de construction (14), entre une couche d'une structure (26) produite par stéréolithographie (10) sur la plate-forme de construction (14) et la feuille (22), un mouvement transversal (34), en particulier de translation, qui est conçu comme un mouvement de la cuve (12), ledit mouvement transversal (34) ayant des sens de mouvement alternés, en particulier des mouvements de va-et-vient, **caractérisé en ce que** le mouvement transversal (34) s'étend selon un angle compris entre 60 degrés et 120 degrés par rapport au mouvement de détachement (32), ou l'angle entre le mouvement transversal et le mouvement de détachement s'écarte de 90 degrés.

2. Dispositif de stéréolithographie (10) selon la revendication 1, **caractérisé en ce que** le mouvement transversal (34) est un mouvement périodique, avec une amplitude de mouvement de moins de 0,03 cm à 2 cm, en particulier de 0,8 mm à 15 mm et de manière particulièrement préférée d'environ 5 mm.

3. Dispositif de stéréolithographie (10) selon l'une des revendications précédentes, **caractérisé en ce que** le dispositif de commande (46) commande le mouvement transversal (34) de telle sorte que le mouvement de détachement (32) marque le début du mouvement transversal (34), en particulier avec un écart de 1 seconde ou moins.

4. Dispositif de stéréolithographie (10) selon l'une des revendications précédentes, **caractérisé en ce qu'**une pluralité de mouvements transversaux (34), en particulier 2 à 10, de préférence 3 ou 4, se superposent au mouvement de détachement (32) .

5. Dispositif de stéréolithographie (10) selon l'une des revendications précédentes, **caractérisé en ce que** le mouvement de détachement (32) s'effectue à une première vitesse, notamment à une vitesse sensiblement constante, jusqu'au détachement du film (22) de la structure (26), et, après le détachement à une deuxième vitesse, égale ou supérieure à la première vitesse.

6. Dispositif de stéréolithographie (10) selon l'une des revendications précédentes, **caractérisé en ce que** le mouvement transversal (34) comprend un mouvement transversal aller (54) et un mouvement transversal retour (56).

7. Dispositif de stéréolithographie (10) selon l'une des revendications précédentes, **caractérisé en ce que** le dispositif de commande (46) commande le mouvement de détachement (32) de telle sorte que d'abord, la vitesse verticale augmente et ensuite réduit la vitesse.

8. Dispositif de stéréolithographie (10) selon l'une des revendications précédentes, **caractérisé en ce que** l'amplitude du mouvement de détachement (32) diffère de moins de la moitié, de préférence de moins de 1/3, de l'amplitude du mouvement transversal (34).

9. Dispositif de stéréolithographie (10) selon l'une des revendications précédentes, **caractérisé en ce que**, pour le mouvement transversal (34), un moteur est relié à un entraînement à manivelle, qui déplace en particulier la cuve (12), et qui génère le mouvement transversal (34) sur la base d'un signal de sortie du dispositif de commande (46), et fournit un profil de vitesse sensiblement sinusoïdal.

10. Dispositif de stéréolithographie (10) selon l'une des revendications précédentes, **caractérisé en ce que** le dispositif de commande (46) commande un arrêt intermédiaire (60) du mouvement transversal (34) entre le mouvement transversal d'aller (54) et le mouvement transversal de retour (56), pour compenser l'inertie de décollement, et en particulier également entre le mouvement transversal de retour et le mouvement transversal d'aller (54), où les deux arrêts intermédiaires (60) sont en particulier sensiblement de même longueur ou se différencient au maximum de 20% en longueur.

11. Dispositif de stéréolithographie (10) selon l'une des revendications précédentes, **caractérisé en ce que** le mouvement de détachement (32) dure entre 1 seconde et 30 secondes, et en particulier environ 4 secondes, et un mouvement transversal aller dure entre 0,2 seconde et 8 secondes, et en particulier environ 1 seconde.

12. Procédé de fonctionnement d'un dispositif de stéréolithographie (10), dans lequel une plate-forme de construction (14) est immergée dans une cuve (12) remplie d'un matériau d'impression (18) fluide, où un film (22) translucide est formée et disposée en bas dans ou sur la cuve (12), ledit film (22) est élastiquement déformable, et où une source de lumière (24) ou une source d'énergie est disposée en dessous du film (22), où le mouvement de la plate-forme de construction (14) par rapport au film (22) est commandé par un dispositif de commande (46) et le dispositif de commande (46) crée une structure (26) sur la plate-forme de construction (14) en couches, et détache le film (22) de la structure (26) au niveau de la couche produite par un mouvement de détachement (32) essentiellement vertical, qui est conçu comme un mouvement de la plate-forme de construction (14), et en ce que le mouvement de détachement (32) est accompagné d'un mouvement transversal (34), en particulier de translation, qui est conçu comme un mouvement de la cuve (12), et s'effectue dans des directions de mouvement alternées, en particulier de manière périodique, **caractérisé en ce que** le mouvement transversal (34) s'effectue selon un angle compris entre 60 degrés et 120 degrés par rapport au mouvement de détachement (32), où l'angle entre le mouvement transversal et le mouvement de détachement s'écarte de 90 degrés.

13. Procédé selon la revendication 12, **caractérisé en ce que** le mouvement transversal (34) s'effectue dans le sens de l'aller et dans le sens du retour et **en ce que** les deux mouvements s'effectuent à une vitesse sinusoïdale.

14. Procédé selon la revendication 12 ou 13, **caractérisé en ce que** le mouvement de détachement (32) est compris entre 1 mm et 15 mm et de préférence d'environ 7 mm et le mouvement transversal (34) par période est compris entre 0,6 mm et 10 mm et de préférence d'environ 3 mm.

15. Procédé selon l'une quelconque des revendications 12 à 14, **caractérisé en ce que** la superposition du mouvement transversal (34) et du mouvement de détachement (32) est effectuée par le dispositif de commande (46) de manière à poursuivre le mouvement de libération (32) pendant le mouvement transversal aller (54), l'arrêt intermédiaire (60), le mouvement transversal retour (56) et le deuxième arrêt intermédiaire (60).
